# EUROPEAN PATENT APPLICATION

(11) **EP 1 719 640 A1**
(43) Date of publication of application: **08.11.2006**
(21) Application number: 06007909.2
(22) Date of filing: 13.04.2006
(51) Int. Cl.: B60B 7/06

(54) **Decorated wheel with a permanent stylized cover and process for its manufacture**

(30) Priority: 04.05.2005 MX PA05004802
(71) Applicant: CID Centro de Investigación y Désarrollo Tecnológico, S.A. de C.V., Lerma 52000 (MX)
(72) Inventor: Gomora-Camargo, Ivan Alejandro, Tlalnepantla 54080 (MX); Gomez-Tellez, Isidro, Tlalnepantla 54080 (MX); Cendejas-Maciel, José Luis, Tlalnepantla 54080 (MX); Mille-Loera, Luis Enrique, Lerma 52000 (MX); Espinoza-Rodriguez, Edgar, Lerma 52000 (MX); Gonzalez-Montiel, Alfonso, Lerma 52000 (MX)
(74) Representative: Röthinger, Rainer

(57) **Abstract**

A decorated wheel is depicted having a permanent stylized cover comprising: a base wheel; an intermediate coat made from a low-density polymer attached on the outer face of the base wheel; and a stylized cover permanently attached on the intermediate layer; the stylized cover has a shape, color, and brightness according to a previously established design, is made from a thermoformable polymer such as bisphenol A polycarbonate o the copolymers thereof, or is made from stainless steel; if the stylized cover is made from bisphenol A polycarbonate or the copolymers thereof, it has a class "A" finish on its surface; also, a process to manufacture the decorated wheel with a stylized permanent cover is depicted and, in the process, the stylized cover and the base wheel form a closed chamber where the intermediate layer made from the low-density polymer is encapsulated.

## Description

### FIELD OF THE INVENTION

The present invention relates to the techniques used in the automotive industry to design and manufacture wheels and, more particularly, it relates to a decorated wheel with a permanent stylized cover, as well as to the process for its manufacture.

### BACKGROUND OF THE INVENTION

It is known by everybody that, in a car, wheels play the essential role of being the support where tires are mounted allowing thus the car to move. However, since wheels are a visible part of cars, for long car drivers have preferred decorated wheels, that is wheels having a certain stylized design in shape, as well as of certain color, preferably metallic such as aluminum or chrome color that, it is known, is highly bright. These features make the wheels to be appealing for users increasing the car aesthetics and wheel manufacturers have thus faced a technical challenge in order for their products not only to comply with their main technical function, but also to include decorations.

One of the first solutions known in the previous art to provide wheels with decorations has been using metal or plastic stylized covers or rims to fully or partly cover the outer face of wheels which are mostly made of steel and included in an important amount of cars. At this point, it is worth mentioning that a steel wheel has a very poor design in shape, is generally black in color, and is almost brightless. A steel wheel is integrated by a center or hub and a ring attached to that center. This type of wheels, as well as others, are provided with a hole for the tire inflating valve, exhaust holes in order for air to be taken into brakes; and an assembling cavity including holes for stud bolts or mounting screws, and a central pilot hole to mount the wheel to the car shaft mass.

Now, the main disadvantage of such covers is that they are not permanently attached to the wheel and they often get out from the wheel when the car is driven in irregular roads or goes into potholes, or those non-permanent covers are simply stolen. Also, plastic covers are fragile and may be easily broken, while metal covers are heavy and easily deformed. One of these covers may be found in the US Patent No. 5,988,782, incorporated herein by reference.

Other solution considered in the previous art to meet such a use need has been to manufacture aluminum, magnesium, or titanium wheels having a highly stylized design in shape. Preferably, these wheels have a plurality of spokes radially running from the wheel center to its ring. Of course, aluminum or magnesium wheels have a very appealing aspect for users. However, wheels made from these materials are considerably more expensive compared to steel wheels which, as have been previously said, have no stylized design in shape.

Furthermore, the previous art has proposed another kind of solution consisting of forming a decorative polymer cover attached to the wheel outer face, the cover surface being provided with certain finish. This type of polymer covers are particularly depicted in US Patents Nos. 3,956,451; 4,682,820; 4,847,030; 4,976,497; 5,128,085; 5,842,750; and 5,874,037, which are incorporated herein by reference. Generally, the inventions of these patents relate to a composed stylized wheel comprising a wheel and polyurethane cover, preferably a high-density one, formed on the wheel. Once this cover is formed having a shape according to a particular design, its surface is prepared in order to be painted with a preferred color or to be covered with a metal finish, resulting in a wheel having a finish on the polyurethane cover.

It is worth mentioning that, for the wheels of the abovementioned patents, it is preferred to use high-density polyurethane, since it provides the cover being formed with enough structural strength to have an acceptable duration, mainly when the cover design has many contours and holes. However, this increases the wheel weight, which is a problem addressed mainly in the US Patent No. 4,976,497 considering the use of hollow inserts in order to reduce the polyurethane cover weight.

Furthermore, although document No. 4,976,497 mentions it is possible to handle a density of 486 kg/m³ (30 pounds per cubic foot), and even of 162 kg/m³ (10 pounds per cubic foot), these density values make the polyurethane cover to become porous. For those skilled in the art, this porosity means that uniform or very bright finishes cannot be made on the polyurethane cover surface, although this kind of finishes are the ones most users wish to see on their wheels.

Furthermore, even using higher densities for polyurethane, it is very hard to attain a class "A" finish, which means the excellent optical properties for the finish which are preferred in the automotive industry. In other words, the polyurethane cover itself has a limitation with respect to the quality of the paint or metal finish that can be provided in the cover.

US Patent No. 6,460,938 incorporated herein by reference is another document of the previous art relating to decorated wheels. Such a patent considers forming by injection a polymer cover on a wheel. However, the wheel being used is manufactured from light metals such as aluminum, magnesium, titanium, or alloys thereof. Then, the polymer cover may be plated with a decorative metal cover, such as chrome. Nevertheless, the use of chrome is being banned by environmental authorities due to the pollution issues raised by using this metal. Once again, the disadvantage is that the cover, once formed on the wheel, has to be prepared in order to apply the desired finish.

Regarding the process to manufacture wheels of the previous art including a polymer cover, it is worth pointing out that a mould associated to the wheel is used to form a cavity. The polymer material is injected therein by means of injection ports and it is cured. Regarding this, the injection is a determinant stage to obtain an appropriate cover attached to the contours, holes, and bores of the wheel. Thus, the previous art has attempted to overcome the problems related to such an injection. For example, the US Patent No. 5,874,127 has developed a special membrane to be placed in the arrangement formed by the wheel, the mould, and the injection machine.

Once the polyurethane has been cured, the mould is removed and the cover surface is prepared for the application of paint or metal coat. In this stage of preparing the surface, a primer coat should be applied in order to adapt the surface and ensure the coat lasts long and has a uniform aspect on the wheel.

From the point of view of the whole productive chain, this process has the disadvantage that, at the stage of preparing the polyurethane cover surface, it takes time and energy since, once the cover has been formed, the whole wheel should be manipulated by machines or workers, and the injection should be very carefully applied. In this sense, according to US Patent 4,976,497, it is possible to separately form the polyurethane cover with the coat, and then stick them one to another by using any suitable means. However, costs increase by using such adherent material applied to the outer face of the wheel and that of the coat. Furthermore, as it has been mentioned before, polyurethane covers do not allow to obtain class "A" finishes.

On the other hand, there are also more complex solutions to obtain a wheel with a decorative finish, as it is exemplified in the Patent Application No. PCT/US2003/023949, which is incorporated herein by reference. This document provides a bright superficial finish for a car wheel. Generally, such a superficial finish is formed by a series of coats of various polymers and a metal film deposited by vacuum. In particular, polymer coats are formed by a lower coat of a polymer acrylic or polyester material deposited on the wheel outer face. On this lower coat there is a primer coat of a polyurethane resin. On the primer coat there is the coat made also from polyurethane. And, on this last coat, the metal film is deposited by vacuum.

The main disadvantage of the invention of such a document is for sure that, upon applying every coat (three at least), the polymer should be cured, which implies using time and specific equipment. Furthermore, handling a vacuum chamber to deposit the metal makes the product unfavorable, as well as its manufacturing process. Also, the preferred metal to form the metal film is indium which, from a commercial point of view, is a scarcely used metal.

### SUMMARY OF THE INVENTION

In order to overcome the existing problems in the state of the art regarding wheels provided with decorative finishes, a decorated wheel has been developed which has a stylized cover, the wheel comprising the following as main elements:
a) a base wheel having an outer face provided with: i) a valve hole; ii) exhaust holes; and iii) an assembling cavity including holes for stud bolts or mounting screws hereinafter referred to only as holes for stud bolts, this cavity including also a central pilot hole;
b) an intermediate coat of a low-density and expandable polymer attached to the wheel outer face and covering it, the intermediate cover having: i) a valve hole concentrically lined up to the valve hole of the base wheel; ii) holes for stud bolts concentrically lined up with those holes for stud bolts of the base wheel; iii) exhaust holes attached to the exhaust holes of the base wheel; and, optionally, iv) a central pilot hole concentrically lined up to the central pilot hole of the base wheel; and
c) a stylized cover with an inner and an outer face, such a stylized cover being attached to the intermediate coat and covering it, and having a shape, color, and brightness according to a previously established design, the stylized cover being provided with: i) a valve hole concentrically lined up to the valve hole of the base wheel; ii) holes for stud bolts concentrically lined up to the holes for stud bolts of the base wheel; iii) exhaust holes attached to the exhaust holes of the base wheel and having a shape according to such a previously established design, the stylized cover optionally covering the central pilot hole of the base wheel.

In the previous arrangement, when the user sees on the wheel direction, he/she perceives only the outer face of such a stylized cover, being hidden both the base wheel, as well as the low-density polymer intermediate coat, wherein there is the advantage that such a cover is permanently attached to the low-density polymer intermediate coat.

In a first preferred embodiment of the present invention, the stylized cover is in contact to the base wheel around the edges of the valve hole, the holes for stud bolts, the exhaust holes, and the central pilot hole of such a base wheel.

In the first embodiment of the present invention, such stylized cover is made from a thermoformable polymer selected from the group comprising bisphenol A polycarbonate, bisphenol A polycarbonate copolymers, polyamide, polyphenylene oxide, and mixtures thereof, wherein the stylized cover is transparent or of any color. More preferably, the stylized cover is made from bisphenol A polycarbonate or the bisphenol A polycarbonate copolymers thereof, with a class "A" finish on their outer face, which means excellent optical properties. More specifically, it characterizes for having high brightness, as well as excellent mechanical properties allowing it to last long and meet the requirements of the automotive industry.

As it was previously mentioned, the stylized cover made from such thermoformable polymers is transparent or of any color. At his point, in an alternative embodiment of the present invention, the stylized cover is transparent, but it is covered with a paint coat applied on any of its faces. Preferably, the stylized cover is covered with chrome-color paint.

In a second preferred embodiment of the decorated wheel of the present invention, the stylized cover is made from stainless steel with a mirror grade finish on its surface, such finish being achieved before the stylized cover is attached to the intermediate coat made from low-density polymer.

On the other hand, in an aspect of the present invention, a process is provided to manufacture the decorated wheel with a permanent stylized cover as has been previously defined, the process of the present invention comprising the stages of:
a) providing a base wheel having an outer face and also i) a valve hole; ii) exhaust holes; and iii) an assembling cavity including holes for stud bolts and central pilot hole;
b) separately forming a stylized cover with an outer and an inner face, the cover having a shape, color, and brightness according to a previously established design. During this stage, the following is formed on the stylized cover: i) a valve hole; ii) holes for stud bolts; iii) exhaust holes; and, depending on the design, iv) a central pilot hole is optionally formed.
c) uniformly applying a low-density and expandable polymer on the outer face of the base wheel;
d) assemble such a stylized cover on the outer face of the base wheel, the valve hole and the holes for stud bolts of the stylized cover being concentrically lined up with the corresponding holes of such a base wheel, while the exhaust holes of the stylized cover are attached to the exhaust holes of the base wheel wherein the stylized cover further contacts the base wheel around the edges of the valve hole, the holes for stud bolts, the exhaust holes, and the central pilot hole of the base wheel, in such a manner that the stylized cover, along with the base wheel, form a closed chamber preventing the expandable polymer from leaking;
e) expanding and curing the low-density polymer keeping the stylized cover pressed against the base wheel so that, when the polymer is expanded and cured, the polymer fills such a closed cavity and attaches both to the wheel outer face and the stylized cover.

Once the low-density polymer has been cured, the pressure on the stylized cover is removed, resulting in the decorated wheel of the present invention.

The stylized cover is formed from a stainless steel sheet or from a thermoformable polymer sheet selected from the group comprising bisphenol A polycarbonate, bisphenol A polycarbonate copolymers, polyamide, polyphenylene oxide, and mixtures thereof.

In a first preferred embodiment of the process of the present invention, at the formation stage (b), the stylized cover is formed from a transparent sheet made of the thermoformable polymers mentioned in the preceding paragraph and, after such stage (b), the process comprises a further stage consisting of a painting stage (f) wherein a paint coat is applied on any faces of such a stylized cover, a chrome-color paint being preferably applied. Then, after this painting stage (f), there is the application stage (c) of the low-density polymer, the assembling stage (d) of the stylized cover on the base wheel, and the expansion and curing stage (e) of the polymer. In this first alternative embodiment of the process, the stylized cover does not require to be covered with a primer coat in order to apply then the paint coat.

In a second preferred embodiment of the present invention, at the formation stage (b), the stylized cover is provided with closes recesses instead of the valve hole, the holes for stud bolts, the exhaust holes, and the central pilot hole. The following stages to be performed are the application stage (c) of the low-density polymer, the assembling stage (d) of the stylized cover on the base wheel, and the expansion and curing stage (e) of the polymer. And, after this stage (e), the process comprises a further stage which is a cutting stage (g) consisting of cutting the closed recesses of the stylized cover in order to form the valve hole, the holes for stud bolts, the exhausting holes and, depending to the design, to form the central pilot hole in the stylized cover. In this embodiment of the process, the stylized cover has more points to be pressed against the base wheel and there is an increase of the safety for the low-density polymer not to leak by the base wheel holes.

It may be appreciated that an object of the present invention is to provide a decorated wheel with a permanent stylized cover, the latter being attached to a intermediate coat made from a low-density polymer, the low-density polymer and the stylized cover adding a very low weight to the base wheel.

A further object of the present invention is to provide a decorated wheel with a permanent stylized cover, wherein countless stylized design may be obtained with the same base wheel.

Yet another object of the invention is to provide a process to manufacture a decorated wheel with a permanent stylized wheel having a stage in which the stylized cover is formed with a particular finish before being attached on the base wheel.

Yet another object of the present invention is to provide a process to manufacture a decorated wheel with a permanent stylized cover, wherein the stylized cover and the base wheel form a closed chamber in order for a low-density polymer to be expanded with no leaks of the polymer by the base wheel.

### BRIEF DESCRIPTION OF DRAWINGS

Aspects which are considered to be characteristic of the present invention will be established with detail in the appended claims. However, the invention itself, due to both its structure and its manufacturing process, along with other objects and advantages thereof, will be better understood in the following description of certain preferred embodiments, when read in the light of the appended drawings, wherein:
Figure 1 is an exploded and upper perspective view of a decorated wheel with a permanent stylized cover constructed according to a first preferred embodiment of the present invention.
Figure 2 is a section view taken along line A-A' of the wheel shown in Figure 1.
Figure 3 shows an upper plan view of a stylized cover lacking the central pilot hole.
Figure 4 shows a cross-section view of a decorated wheel with a permanent stylized cover according to the first preferred embodiment of the present invention.
Figure 5 shows a lateral and exploded view of a decorated wheel with a permanent stylized cover constructed according to a second preferred embodiment of the present invention.
Figure 6 is a flow chart of the manufacturing process of the decorated wheel with a permanent stylized cover of the present invention.
Figure 7 is a flow chart of a first preferred embodiment of the manufacturing process of the decorated wheel with a permanent stylized cover of the present invention.
Figure 8 is a flow chart of a second preferred embodiment of the manufacturing process of the decorated wheel with a permanent stylized cover of the present invention.

### DETAILED DESCRIPTION OF THE INVENTION

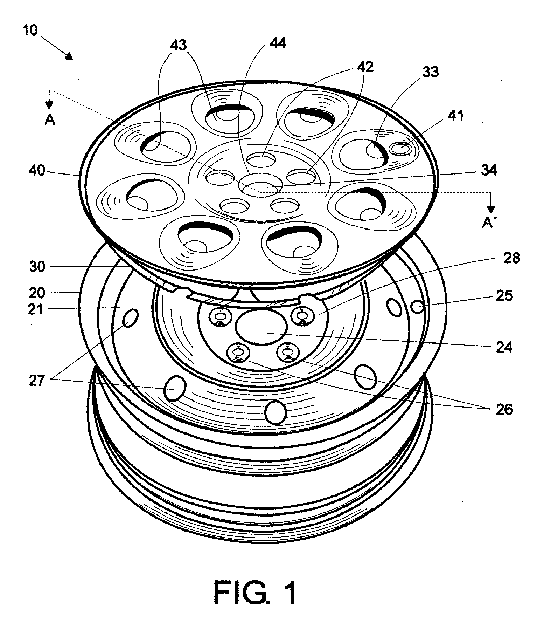

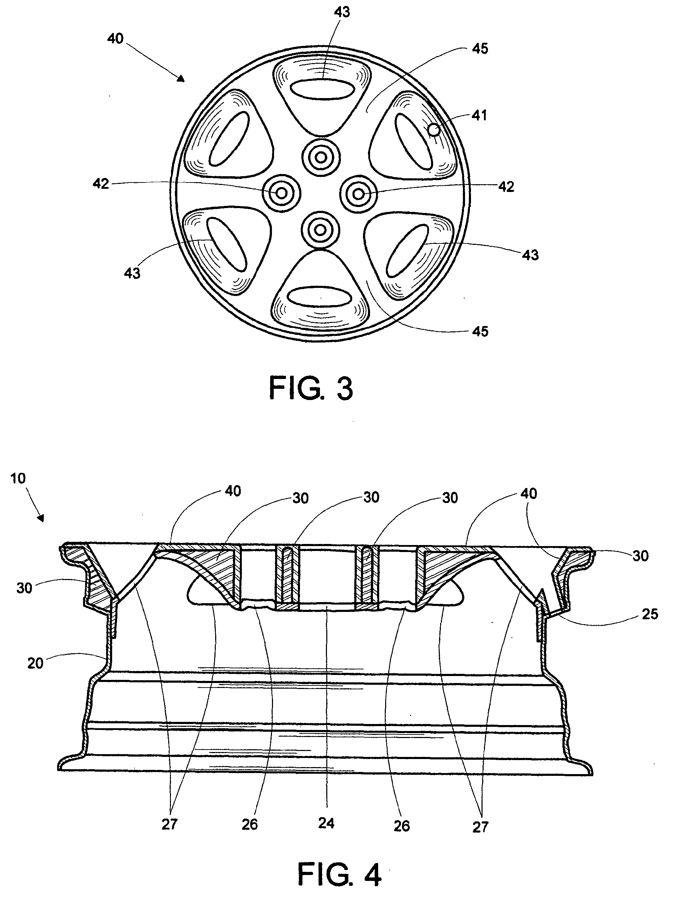

Specifically referring to Figure 1, it shows an exploded view of a decorated wheel 10 with a stylized cover constructed according to a first preferred embodiment that should be considered to be illustrative in nature and no limitative of the present invention. The decorated wheel 10 comprises: a base wheel 20 with an outer face 21; an intermediate coat 30 made from an expandable and low-density polymer; and a stylized cover 40. Although in Figure 1 the elements of the decorated wheel 10 are shown apart from one another, it should be understood that, in practice, the intermediate coat 30 made from the low-density polymer covers and is attached to the outer face 21 of the base wheel 20. Also, it should be understood that the stylized cover 40 covers and is attached to the intermediate coat 30 made from the low-density polymer, as seen in Figure 4.

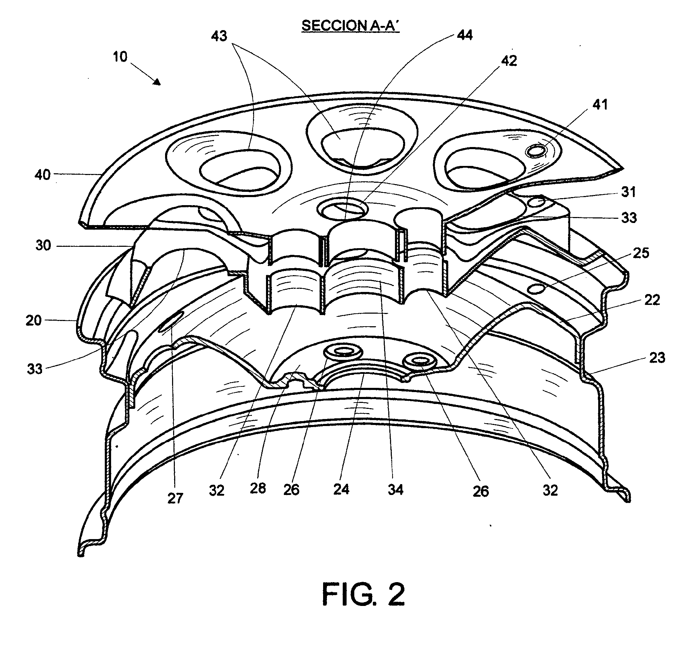

Referring now jointly to Figures 1 and 2, the latter shows a section view taken along line A-A' of Figure 1. It may be said that the base wheel 20 is integrated by a hub 22 and a ring 23 joined together. The base wheel 20 is provided with a valve hole 25, holes for stud bolts 26, an assembling cavity 28 including exhaust holes 27 and a central pilot hole 24. The base wheel 20 is made from a metal or a metal allow selected from the group comprising steel, aluminum, magnesium, and alloys thereof.

As it may be seen in Figure 1, the base wheel 20 itself has a very poor design corresponding to steel wheels. The color of these wheels is generally black and therefore they do not attract users' attention. Thus, in the embodiment being depicted, the base wheel 20 is preferably a steel wheel. Later in the present invention it will be possible to appreciate that on these wheels it is possible to obtain countless designs with the stylized cover 40.

Regarding the intermediate coat 30 made from the low-density polymer, Figure 2 shows that is has a valve hole 31, holes for stud bolts 32, exhaust holes 33, and a central pilot hole 34. As it may be supposed, the valve hole 31, the holes for stud bolts 32, and the central pilot hole 34 are concentrically lined up with the corresponding holes that are provided in the base wheel 20, that is, the valve hole 25, the holes for stud bolts 26, and the central pilot hole 24. Regarding the exhaust holes 33 provided in the intermediate coat 30, they are attached to the exhaust holes 27 of the base wheel 20 and may be of different size. Regarding this, the exhaust holes 33 are not necessarily lined up with the exhaust holes 27 of the base wheel 20 since, due to the stylized cover 40 design, they may be moved from the central axis of those exhaust holes 27. However, both exhaust holes 27 and 33 should be attached to one another in order for the air flow to be brought into the car brakes.

The intermediate coat 30 is made from a low-density polymer selected from the group of polymers comprising polyurethane, polypropylene, and polystyrene. One of the advantages of using a low-density polymer is that the intermediate coat 30 does not contribute significant further weight to the base wheel 20, as in the previous art. For example, in a wheel being 13 or 14 inches (33.0 cm or 35.6 cm), the maximum weight of the intermediate coat is about 500 grams (1.1025 pounds). In the wheels having such size, using a weight exceeding 500 grams (1.1025 pounds) it would be absolutely unnecessary to meet the purposes of the present invention.

In a specific embodiment of the present invention, the low-density polymer is polyurethane having a density ranging from about 30 kg/m³ (1.8729 Ib/pie³) to about 150 kg/m³ (9.3645 Ib/pie³), more preferably from about 80 kg/m³ (4.9944 Ib/pie³) to about 120 kg/m³ (7.4916 Ib/pie³). The advantage of using polyurethane is that, upon being applied and cured, this polymer is chemically and immediately bonded both to the outer face of the base wheel 20, as well as to the stylized cover 40, whether the latter is made from a thermoformable polymer or from stainless steel. Consequently, the stylized cover 40 is permanently attached to the intermediate coat 30.

Unlike decorative wheels of the previous art, the surface of the intermediate coat 30 made from the low-density polymer does not require to be prepared in order to form a finish. On the contrary, the finish is provided now in a separate element, namely the stylized cover 40 having a shape, color, and brightness according to a previously established design.

Figures 1 and 2 show that the stylized cover 40 is provided with a valve hole 41 concentrically lined up with the valve hole 25 of the base wheel 20; holes for stud bolts 42 concentrically lined up with the holes for stud bolts 26 of the base wheel 20; and exhaust holes 43 attached to those exhaust holes 27 provided in the base wheel 20. In the stylized cover 40, exhaust holes 43 are stylized in shape according to the previously established design, so that they are not necessarily concentrically lined up with the exhaust holes 27 of the base wheel 20. However, exhaust holes 43 and 27 should be attached to one another in order for air to be brought into brakes. That is, a concentrical alignment is not necessary between exhaust holes 43 and 27.

Optionally, the stylized cover 40 has a central pilot hole 44 that is lined up with the central pilot hole 24 of the base wheel 20. This optional characteristic makes easy to form a great variety of designs for the stylized cover 40.

However, if the central pilot hole 24 of the base wheel 20 is to be hidden, in an embodiment that is not shown, the stylized cover 40 includes at its central part means to couple a hub rim in order to obstruct the central pilot hole 24, these means being able to be provided in the shape of a tab, notch, male-female coupling, etcetera.

Furthermore, as another option to hide the central pilot hole 24 of the base wheel 20, the stylized cover 40 may be designed in order to fully cover such a central pilot hole 24 of the base wheel 20. This is shown in detail in Figure 3, wherein a stylized cover 40 is shown having the valve hole 41, the holes for stud bolts 42, and the exhaust holes 43. However, the stylized cover 40 of Figure 3 lacks a central pilot hole. This has the advantage of obtaining another family of designs since, as shown in Figure 3, the stylized cover 40 includes spokes 45 extending from the central part of the stylized cover 40 to the perimetric edge thereof. As it may be appreciated, spokes 45 increase the appealing effect of the stylized cover 40.

Now it is important to talk about the materials from which the stylized cover 40 of the first embodiment is made. The stylized cover 40 is made from a thermoformable polymer selected from the group comprising bisphenol A polycarbonate, bisphenol A polycarbonate copolymers, polyamide, polyphenylene oxide, or a mixture thereof. Preferably, the stylized cover is made from a sheet of bisphenol A polycarbonate or the copolymers thereof which are commercially available under the trademarks Xilex® and Lexan®, a sheet of Lexan® series SLX being preferably used. Similarly, the stylized cover 40 may be made from a sheet from a mixture of polyamide and polyphenylene oxide which is commercially known under the trademark Noryl®.

The stylized cover made from such thermoformable polymers may be of any color or transparent. At this point, in an alternative embodiment, the stylized cover 40 made from such thermoformable polymers is transparent and covered at any of its faces with a paint coat, more preferably a chrome-color paint.

From an optical point of view, the stylized cover 40 is made from bisphenol A polycarbonate or the copolymers thereof having excellent optical properties. In particular, it does allow paint color to be distorted when a user sees towards the decorated wheel 10, which those skilled in the art know as "haze", which is a measure of the amount of perpendicular light transmission lost due to light dispersion within the stylized cover. The less the haze index, the better are the optical properties of the stylized cover. Preferably, the stylized cover has a haze index lower than 1.0% as measured under standard ASTM D1003.

Another outstanding optical property of the stylized cover 40 made from bisphenol A polycarbonate or the copolymers thereof is that light transmission on it is excellent. The stylized cover generally transmits from about 80% to about 90% of visible light as measured under standard ASTM D 1003 and is almost opaque to ultraviolet light, which is an outstanding property to protect the paint of the stylized cover from sun ultraviolet beams.

Furthermore, the stylized cover 40 made from bisphenol A polycarbonate or the copolymers thereof is exceptionally bright. At this point, brightness in some surface is associated to the capacity of such a surface to reflect light in some directions rather than others. Preferably, the stylized cover has brightness values exceeding 100 as measured at 60° of inclination with a brightness meter according to standard ASTM D 523.

Concerning the mechanical properties of the stylized cover made from bisphenol A polycarbonate or the copolymers thereof, it has a tensile strength at the yield point from about 30 to about 80 N/m², a breakage tensile strength from about 20 to about 70 N/m², a breakage elongation from about 60 to about 200, and a modulus of tension from about 500 to about 2500 N/m², all of these parameters being measured under standard ASTM D882.

The abovementioned mechanical properties and, above all, the optical properties make the stylized cover to be considered as having a class "A" finish, with a minimum life span of ten years. As it has been previously mentioned, this kind of finish is preferred in the automotive industry.

Reference is made know to Figure 4 in order to depict with more detail the structural features of the stylized cover 40 with respect to the base wheel 20 and the intermediate coat 30 made from the low-density polymer. This Figure shows that the stylized cover 40 contacts the base wheel 20 around the edges of: the valve hole 25, the holes for stud bolts 26, the exhaust holes 27, and the central pilot hole 24 of the base wheel 20. This exhibits the advantage that the intermediate coat 30 made from the low-density polymer is encapsulated between the base wheel 20 and the inner face of the stylized cover 40. Consequently, a user may only see the stylized cover 40. This contact relationship between the stylized cover 40 and the base wheel 20 has further advantages during the wheel manufacturing process, which will be explained later herein.

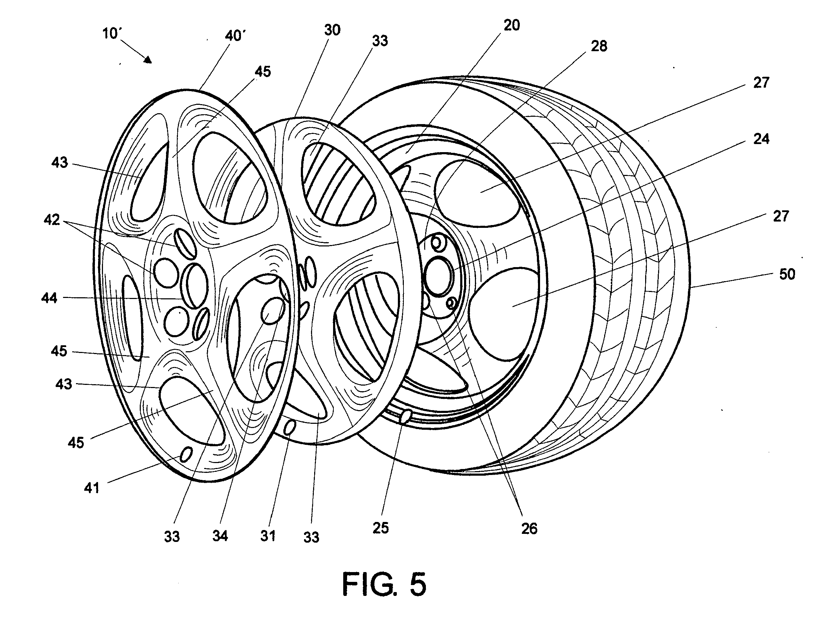

On the other hand, Figure 5 shows an exploded and lateral perspective view of a decorated wheel 10' having a stylized cover constructed according to a second preferred embodiment of the present invention. This second embodiment shows that the decorated wheel 10' has as essential elements the base wheel 20 wherein a tire 50 is mounted, the intermediate coat 30 made from the low-density polymer, and a stylized cover 40'. The characteristic of this second embodiment is that the stylized cover 40' is made from stainless steel, preferably with a mirror grade finish on its surface, which represents of course a very appealing wheel for users.

The base wheel 20 has a valve hole 25, exhaust holes 27, and an assembling cavity 28 including holes for stud bolts 26 and a central pilot hole 24. On the other hand, the intermediate coat 30 made from the low-density polymer has a valve hole 31, holes for stud bolts 32, exhaust holes 33, and a central pilot hole 34. From them, the valve hole 31, the holes for stud bolts 32, and the central pilot hole 34 are concentrically lined up with the corresponding holes provided in the base wheel 20, that is the valve hole 25, the holes for stud bolts 26, and the central pilot hole 24. Regarding exhaust holes 33, these are attached to the exhaust holes 27 of the base wheel 20 in order for air flow to be brought into the car brakes.

As it may be seen, the stainless steel stylized cover 40' has a valve hole 41 that is concentrically lined up with the valve hole 25 of the base wheel 20; the holes for stud bolts 42 concentrically lined up with the holes for stud bolts 26 of the base wheel 20; the exhaust holes 43 attached to those exhaust holes 27 provided in the base wheel 20; as well as a central pilot hole 44 lined up with the central pilot hole 24 of the base wheel 20.

In the stylized cover 40', exhaust holes 43 are stylized in shape according to a previously established design. Furthermore, there are spokes 45 running from the central part of the stylized cover 40' to the perimetric edge there of, which is highly appealing for users. Once again, in this second embodiment, the base wheel 20 is preferably made from steel which, as it may be seen, has a very poor design on its surface. At this point, it is apparent the improvement in the base wheel 20, which is achieved by means of the stylized cover 40' design.

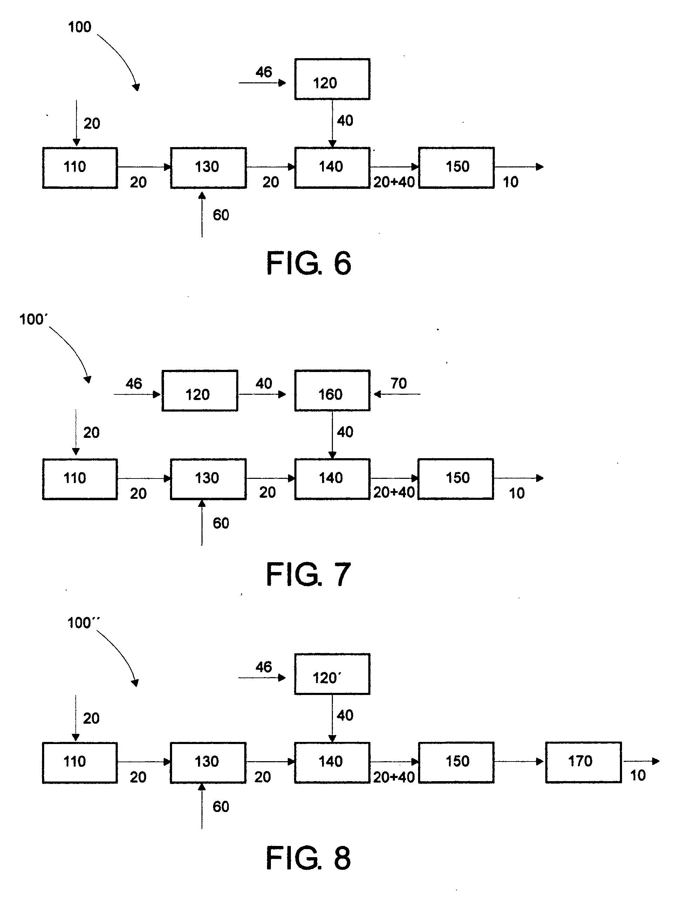

Referring now to Figure 6, showing a diagram of the stages of the manufacturing process 100 of the decorated wheel with a permanent stylized cover of the present invention, the process begins with stage 110 providing a base wheel 20 having an outer face with a valve hole, holes for stud bolts, and an assembling cavity including exhaust holes and a central pilot hole, which have been previously depicted. Preferably, the base wheel provided in this first stage 120 is a steel wheel but, as it has been already mentioned, wheels made from other metals, such as aluminum or magnesium, may be provided.

Figure 6 shows that, regardless of stage 110, there is a formation stage 120 in which a sheet 46 forms a stylized cover 40 according to a previously established design. Preferably, sheet 46 is made from stainless steel or from a thermoformable polymer selected from the group comprising bisphenol A polycarbonate, bisphenol A polycarbonate copolymers, polyamide, polyphenylene oxide or a mixture thereof. More preferably, sheet 46 is a sheet made from bisphenol A polycarbonate or the copolymers thereof. At the formation stage 120, the stylized cover 40 is provided with a valve hole, holes for stud bolts, exhaust holes and, optionally, a central pilot hole.

Preferably, at the formation stage 120, a sheet 46 made from any of such thermoformable polymers is used, which feed a thermoforming mould that, using heat and pressure, conforms the stylized cover 40 into the thermoformable polymer sheet. Once the sheet has been thermoformed, it is cut to separate the stylized cover 40 from the rest of the sheet. The thermoforming mould is designed in such manner that, upon thermoforming sheet 46, there are formed the valve hole, the holes for stud bolts, the exhaust holes and, depending on the design, the central pilot hole is optionally formed in such a stylized cover 40.

On the other hand, at the formation stage 120, the stylized cover 40 results also from a stainless steel sheet subjected to a stamping operation.

Now, at the process illustrate in Figure 6, one may see the performance of stage 130 corresponding to the application of a low-density polymer 60 on the outer face of the base wheel 20. In this application stage 130, the low-density polymer 60 is uniformly applied either manually or using automatic injectors on the outer face of the base wheel.

Once the low-density polymer has been applied, the assembling stage 140 follows, wherein the stylized cover 40 resulting from the formation stage 120 is assembled to the outer face of the base wheel 20. This assembly is performed manually or using mechanical robots. By assembling the stylized cover 40 on the base wheel 20, the holes for stud bolts and the valve hole of the stylized cover are concentrically lined up with the corresponding holes of the base wheel 20. Likewise, by assembling the stylized cover 40 on the base wheel 20, the stylized cover 40 should make contact around the edges of the valve hole, the holes for stud bolts, the exhaust holes, and the central pilot hole of the base wheel so that the stylized cover, along with the base wheel, form a closed chamber preventing the low-density polymer from leaking.

Then, at the expansion and curing stage 150, the stylized cover is pressed against the base wheel 20 for enough time in order for the polymer to be expanded and cured. During expansion, the polymer fills the closed chamber formed between the stylized cover 40 and the base wheel 20. Also, at this expansion and curing stage 150, the polymer attaches both to the outer face of the base wheel and to the stylized cover. Once the expansion and curing stage 150 is completed, the stylized cover is not pressed anymore and the decorated wheel 10 of the present invention is obtained.

Referring now to Figure 7, it shows a block diagram of a process 100' to manufacture a decorated wheel with a permanent stylized cover according to a first preferred embodiment of the present invention. In the manufacturing process 100', all the stages of the process from Figure 6 are performed. In other words, the manufacturing process 100' includes: stage 110 providing a base wheel 20; the formation stage 120 forming a stylized cover 40 from a sheet 46; the application stage 130 uniformly applying a low-density polymer 60 on the base wheel 20; the assembling stage 140 assembling the stylized cover 40 on the base wheel 20, forming a closed chamber preventing the low-density polymer from leaking by the various holes of the base wheel; and the expansion and curing stage 150 expanding and curing the low-density polymer.

However, it is worth pointing out that, in the manufacturing process 100' from Figure 7, sheet 46 provided in the formation stage 120 is a sheet made of a transparent thermoformable polymer. Consequently, after this formation stage 120, the manufacturing process 100' of this first embodiment further comprises a painting stage 160, wherein a paint coat 70 is applied on any faces of such a stylized cover 40, whether the inner face or the outer face. At this point, the paint 70 used in stage 160 is preferably a chrome-color paint which provides the stylized cover with finish that is desired by many users. In particular, it is worth mentioning that the stylized cover surface does not require to be covered with primer, as in the previous art, which represents an advantage concerning cost and time.

Finally, referring to Figure 8, it shows a second embodiment of the manufacturing process of the present invention, which is now identified with number 100". As shown in such a manufacturing process 100", the essential stages shown in Figure 6 are performed. Nevertheless, in the formation stage 120 of the manufacturing process 100" from Figure 8, the stylized cover is formed in such a manner that it is provided with closed recesses instead of the holes provided in the formation stage 120 of the process from Figure 6. In few words, the sheet has no openings or holes. Then, in the manufacturing process 100", the following is performed: the application stage 130 of the low-density polymer; the assembling stage 140 to place the stylized cover on the base wheel 20, as well as stage 150 expanding and curing the low-density polymer. After this stage 150, the manufacturing process 100" comprises performing a cutting stage 170 consisting of cutting the closed recesses of stylized cover 40 in order to form the valve hole, the holes for stud bolts, the exhaust holes and, depending on the design, the central pilot hole in the stylized cover.

In the cutting stage 170 it is performed by using routers, swage tools, simple or combined dies, and laser cutters, these tools and equipment cutting and perforating such recesses to finally obtain thereby the decorated wheel 10. In this second embodiment of the manufacturing process, closed recesses in the stylized cover represent additional support points to press the cover against the base wheel in the expansion and curing stage 150 of the low-density polymer, preventing thereby the expandable polymer from leaking.

According to what has been depicted above, it may be seen that the decorated wheel with a stylized cover has been designed to improve the aspect of those wheels that are not sufficiently appealing for users. It will be apparent for those skilled in the art that the description of certain embodiments of the decorated wheel illustrated in the appended drawings are only illustrative in nature, but non limitative of the present invention, since it is possible to perform some modifications of detail, but without departing from the true scope of the invention. For example, the particular design of the stylized cover may be varied, various low-density polymers may be used for the intermediate coat and thus the present invention should not be considered as limited except for the requirements of the previous art, as well as by the appended claims.

## Claims

1. A decorated wheel with a permanent stylized cover comprising: a) a base wheel having an outer face and being provided with: i) a valve holes; ii) exhaust holes; and iii) an assembly cavity including holes for stud bolts and a central pilot hole; b) an intermediate coat made from a expandable and low-density polymer attached to the wheel outer face and covering it, the intermediate coat including: i) a valve hole concentrically lined up with the valve hole of the base wheel; ii) holes for stud bolts concentrically lined up with the holes for stud bolts of the base wheel; iii) exhaust holes attached to the exhaust holes of the base wheel; and, optionally iv) a central pilot hole concentrically lined up with the central pilot hole of the base wheel; and c) a stylized cover with an inner face and an outer face, such a stylized cover being attached to such intermediate coat and covering it, the stylized cover having a shape, color, and brightness according to a previously established design and being provided with: i) a valve hole concentrically lined up with the valve hole of the base wheel; ii) holes for stud bolts concentrically lined up with the holes for stud bolts of the base wheel; iii) exhaust holes attached to the exhaust holes of the base wheel and having a shape according to such a previously established design, the stylized cover optionally covering the central pilot hole of the base wheel wherein, when a user sees towards the wheel, he/she perceives only the outer face of such a stylized cover, being both such a base wheel and such an intermediate layer hidden thereby.

2. A decorated wheel with a permanent stylized cover according to claim 1 wherein such a stylized cover further get in contact with such a base wheel around the edges of the valve hole, the holes for stud bolts, the exhaust holes, and the central pilot hole of such a base wheel, whereby the intermediate coat made from low-density polymer is encapsulated between such a base wheel and the inner face of such a stylized cover.

3. A decorated wheel with a stylized cover according to claim 1 wherein such a stylized cover is further made from a thermoformable polymer selected from the group comprising bisphenol A polycarbonate, bisphenol A polycarbonate copolymers, polyamide, polyphenylene oxide, and mixtures thereof, the stylized covering being transparent or of any color.

4. A decorated wheel with a permanent stylized cover according to claim 3 wherein such a stylized cover made from such thermoformable polymers is further transparent and covered with a paint coat on any faces thereof.

5. A decorated wheel with a permanent stylized cover according to claim 4 wherein the paint is a chrome-color paint.

6. A decorated wheel with a permanent stylized cover according to claim 3 wherein such a stylized cover is further made from bisphenol A polycarbonate or the copolymers thereof.

7. A decorated wheel with a permanent stylized cover according to claim 6 wherein the stylized cover made from bisphenol A polycarbonate or the copolymers thereof has a haze index lower than 1.0% as measured under standard ASTM D1003, it transmits from 80% to 90% of visible light as measured under standard ASTM D 1003, it has brightness values higher than 100 as measured at 60° of inclination with a brightness meter according to standard ASTM D 523 and, under standard ASTM D882, such a stylized cover has: a tensile strength at the yield point from 30 to 80 N/m², a breakage tensile strength from 20 to 70 N/m², a breakage elongation from 60 to 200%, and a modulus of tension from 500 to 2500 N/m².

8. A decorated wheel with a permanent stylized cover according to claim 1 wherein such a stylized cover is further made from stainless steel having a mirror grade finish on its surface.

9. A decorated wheel with a permanent stylized cover according to claim 1 wherein such a stylized cover further includes at its central part means to couple a hub rim in order to obstruct the central pilot hole of the base wheel.

10. A decorated wheel with a permanent stylized cover according to claim 1 wherein the design of such a stylized cover includes spokes extending from the central part of the stylized cover towards the perimetric edge thereof.

11. A decorated wheel with a permanent stylized cover according to claim 1 wherein such a base wheel is further made from a metal or metal alloy selected from the group comprising steel, aluminum, magnesium, and alloys thereof.

12. A decorated wheel with a permanent stylized cover according to claim 11 wherein such a base wheel is further made from steel.

13. A decorated wheel with a permanent stylized cover according to claim 1 wherein such low-density polymer from which such an intermediate coat is made is further selected from the group of polymers comprising polyurethane, polypropylene, and polystyrene.

14. A decorated wheel with a permanent stylized cover according to claim 13 wherein the intermediate layer is made from polyurethane having a density from 30 kg/m³ (1.8729 Ib/pie³) to 150 kg/m³ (9.3645 Ib/pie³).

15. A decorated wheel with a permanent stylized cover according to claim 14 wherein the intermediate coat is made from a polyurethane having a density from 80 kg/m³ (4.9944 Ib/pie³) to 120 kg/m³(7.4916 Ib/pie³).

16. A process to manufacture a decorated wheel with a permanent stylized cover as defined in claim 1, wherein the process comprises the stages of: a) providing a base wheel having and outer face and also i) a valve hole; ii) exhaust holes; and iii) an assembling cavity including holes for stud bolts and a central pilot hole; b) separately forming a stylized cover with an outer face and an inner face, the cover having a shape, color, and brightness according to a previously established design; during this stage, the following is provided on the stylized cover: i) a valve hole; ii) holes for stud bolts; iii) exhaust holes; and, depending on the design, iv) a central pilot hole is optionally formed; c) uniformly applying an expandable and low-density polymer on the outer face of the base wheel; d) assembling such a stylized cover on the outer face of the base wheel, wherein the valve hole and the holes for stud bolts of the stylized cover are concentrically lined up with the corresponding holes of such a base wheel, while the exhaust holes of the stylized cover are attached to the exhaust holes of the base wheel wherein the stylized cover is further in contact with the base wheel around the edges of the valve hole, the holes for stud bolts, the exhaust holes, and the central pilot hole of the base wheel, so that the stylized cover, along with the base wheel, form a closed chamber preventing the expandable polymer from leaking; e) expanding and curing the low-density polymer maintaining the stylized cover pressed against the base wheel in such a manner that, once the polymer is expanded and cured, the polymer fills the closed chamber and attaches both to the wheel outer face and to the stylized cover whereby, once the low-density polymer has been cured, the pressure on the stylized cover is removed providing thereby the decorated wheel.

17. A process to manufacture a decorated wheel with a permanent stylized cover according to claim 16 wherein, at stage (a), the base wheel is further a steel wheel.

18. A process to manufacture a decorated wheel with a permanent stylized cover according to claim 16 wherein, at the formation stage (b), the stylized cover is formed from a sheet made from a thermoformable polymer selected from the group comprising bispheriol A polycarbonate, bisphenol A polycarbonate copolymers, polyamide, polyphenylene oxide, and mixtures thereof, wherein the cover is transparent or of any color.

19. A process to manufacture a decorated wheel with a permanent stylized cover according to claim 18 wherein such a thermoformable polymer is bisphenol A polycarbonate or the copolymers thereof.

20. A process to manufacture a decorated wheel with a permanent stylized cover according to claim 18 wherein, at the formation stage (b), the thermoformable polymer sheet is fed into a thermoforming mould which, by means of heat and pressure, forms such a stylized cover; once the sheet has been thermoformed, it is cut to separate the stylized cover from the rest of the sheet.

21. A process to manufacture a decorated wheel with a permanent stylized cover according to claim 20 wherein, at the formation stage (b), the thermoforming mould is further designed in such a manner that, upon thermoforming the thermoformable polymer sheet, there are formed the valve hole, holes for stud bolts, exhaust holes and, optionally, the central pilot hole in such a stylized cover.

22. A process to manufacture a decorated wheel with a permanent stylized cover according to claim 16 wherein, at the formation stage (b), the stylized cover is further formed from a stainless steel sheet subjected to a stamping operation.

23. A process to manufacture a decorated wheel with a permanent stylized cover according to claim 16 wherein, at the application stage (c), the low-density polymer is applied manually or using automatic injectors on the outer face of the base wheel.

24. A process to manufacture a decorated wheel with a permanent stylized cover according to claim 16 wherein, at the assembling stage (d), such a stylized cover is further assembled manually or using mechanical robots.

25. A process to manufacture a decorated wheel with a permanent stylized cover according to claim 18 wherein, at the formation stage (b), the thermoformable polymer sheet is transparent and, after performing such a stage (b), the process comprises a further stage that is a painting stage (f), wherein a paint coat is applied on any faces of such a stylized cover.

26. A process to manufacture a decorated wheel with a permanent stylized cover according to claim 25 wherein, at the painting stage (f), the paint coat being applied is a chrome-color paint.

27. A process to manufacture a decorated wheel with a permanent stylized cover according to claim 16 wherein, at the formation stage (b), the stylized cover is provided with closes recesses instead of the valve hole, the holes for stud bolts, the exhaust holes, and the central pilot hole. The following stages to be applied are: the application stage (c) of the low-density polymer, the assembling stage (d) of the stylized cover on the base wheel, as well as the expansion and curing stage (e) of the low-density polymer. After such stage (e) in the process, a cutting stage (g) is performed consisting of cutting the closed recesses of the stylized cover in order to form the valve hole, the holes for stud bolts, the exhaust holes and, optionally, the central pilot hole in such a stylized cover.

28. A process to manufacture a decorated wheel with a permanent stylized cover according to claim 27 wherein the cutting stage (g) is performed by using routers, swage tools, simple or combined dies, and laser cutters to cut and perforate such recesses.
